# FASCICULE DE BREVET EUROPEEN

(11) **EP 2 402 639 B1**
(45) Date de publication et mention de la délivrance du brevet: **20.03.2013**
(21) Numéro de dépôt: 11171945.6
(22) Date de dépôt: 29.06.2011
(51) Int. Cl.: F16L 37/091

(54) **Insert de raccord instantané**
Steckanschlusseinsatz
Instant coupling insert

(30) Priorité: 29.06.2010 FR 1055227
(43) Date de publication de la demande: 04.01.2012
(73) Titulaire: PARKER HANNIFIN MANUFACTURING France SAS, 74100 Ville-la-Grand (FR)
(72) Inventeur: Medina, José, 74420 SAINT ANDRE DE BOEGE (FR)
(74) Mandataire: Lavialle, Bruno François Stéphane

(56) Documents cités:
- US-A- 4 288 113
- US-A- 6 145 887

## Description

La présente invention concerne le domaine des raccords dits instantanés ou rapides par lesquels l'extrémité d'une tubulure est retenue de manière étanche dans un alésage destiné à l'accueillir après que celle-ci y a été librement introduite, à l'encontre d'un effort d'extraction.

### ARRIERE PLAN DE L'INVENTION

Dans un type particulier de raccord, une rondelle à denture intérieure possède des dents qui sont soulevées par flexion lors de l'introduction du tube et qui mordent le tube pour s'opposer à son extraction.

La plupart des raccords à rondelle dentée comportent des dents attachées par leur racine à une couronne qui est logée dans une gorge de l'alésage. Cette gorge est en général ménagée entre un épaulement de l'alésage et un insert, ce qui permet d'encastrer la couronne ou à tout le moins de la retenir axialement. Dans d'autres cas cette gorge est en totalité réalisée dans un insert pré-équipé de la rondelle qui est logé dans l'alésage.

Ces dispositifs comportent également un poussoir de déconnexion dont la fonction est d'écarter les dents du tube de manière à libérer l'accrochage. Ce poussoir fait également partie de l'insert.

Ces raccords instantanés sont utilisés dans de nombreux circuits de fluide dans l'industrie mécanique comme dans l'industrie automobile où les pressions peuvent être importantes. Or, notamment dans le cas des circuits de freinage des véhicules poids lourds, le risque de déconnexion spontané n'est pas nul. Ces raccords sont en effet soumis à des chocs ou des coups qui, s'ils sont encaissés par le poussoir au niveau de sa collerette, peuvent engendrer un enfoncement de ce dernier et une déconnexion alors que le circuit est en pression. L'ouverture du circuit conduit à une mise en sécurité brutale du véhicule (freinage rapide et non contrôlé donc dangereux) si celui-ci est en service ou à un coup de fouet de l'extrémité ainsi libérée de la tubulure qui peut blesser un opérateur situé à proximité.

Il convient donc de prévoir des moyens pour éviter cette déconnexion. On connaît plusieurs dispositifs de raccordement équipés de ces moyens de sécurité. Ils procèdent tous du même principe, à savoir de verrouiller le poussoir dans sa position inactive, soit directement par une butée externe (voir US 6 145 887), soit indirectement, en bloquant toute déformation des dents dans le sens de l'éloignement de la paroi de la tubulure au moyen d'une butée interne qui est plaquée contre ces dents sous l'effet de la pression établie dans le raccord. Cette butée interne est soit une rondelle libre qui coopère avec le joint d'étanchéité jouant le rôle d'un piston annulaire (voir US 4 288 113), soit le joint lui-même que la pression plaque conte les dents (voir FR 2 790 056).

### OBJET DE L'INVENTION

Par l'invention, on se propose d'assurer cette fonction de sécurité dans un insert qui présente l'intérêt de rassembler en une seule pièce plusieurs des composants du raccord et donc d'en faciliter le montage, généralement réalisé au moyen d'un seul coup de presse dans l'alésage destiné à loger le raccord.

A cet effet l'invention a pour objet un insert tubulaire pour raccord instantané destiné à être logé dans un alésage, comportant un corps généralement tubulaire, au moins une rondelle à dents de cramponnage d'une tubulure, et un poussoir tubulaire situé en arrière de la rondelle dans le sens d'introduction de ladite tubulure à raccorder, tous deux logés dans ce corps tubulaire dont la surface interne définit des moyens de guidage du poussoir et de maintien de la rondelle, caractérisé en ce que qu'il comporte, en avant de la rondelle dentée, une paroi annulaire transversale attachée au bord extrême correspondant du corps annulaire et découpée en au moins deux volets inclinables en direction de la rondelle à dents.

Dans un premier mode de réalisation, cette paroi est conformée en un anneau attaché par des pattes flexibles au bord extrême du corps tubulaire.

Dans une première variante de ce mode de réalisation, l'anneau est divisé en deux arceaux attachés par leur partie médiane au bord extrême du corps tubulaire.

Dans une autre variante de réalisation, les arceaux et/ou l'anneau sont pourvus de reliefs sur leur face tournée vers la rondelle, sensiblement en correspondance de profil avec les dents de cette dernière.

Dans le cas des arceaux, ceux-ci peuvent posséder un bord périphérique externe dont au moins un secteur est de rayon supérieur au diamètre interne du corps mesuré à son bord extrême

Dans un deuxième mode de réalisation, cette paroi est divisée en une pluralité de palettes flexibles dont l'extrémité libre est conformée pour prendre appui sur les dents de la rondelle au maximum du fléchissement

Dans une variante de réalisation de ce deuxième mode, l'extrémité libre de chaque palette possède un relief sur sa face tournée vers la rondelle dont le profil est sensiblement en correspondance de forme avec le profil des dents de cette dernière.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- la figure 1 est une vue en demi-coupe axiale de l'insert selon l'invention, mis en place dans un alésage de connexion,
- la figure 2 illustre par un premier schéma le comportement de l'insert selon la figure 1 sous l'effet du joint déformé et déplacé par la pression,
- les figures 3a et 3b sont des schémas d'une variante de réalisation des figures 1 et 2, respectivement au repos et sous pression,

- la figure 4 est un schéma d'une réalisation de l'invention sous forme de palettes individuelles,
- la figure 5 illustre une autre réalisation de l'invention.

### DESCRIPTION DETAILLEE DE L'INVENTION

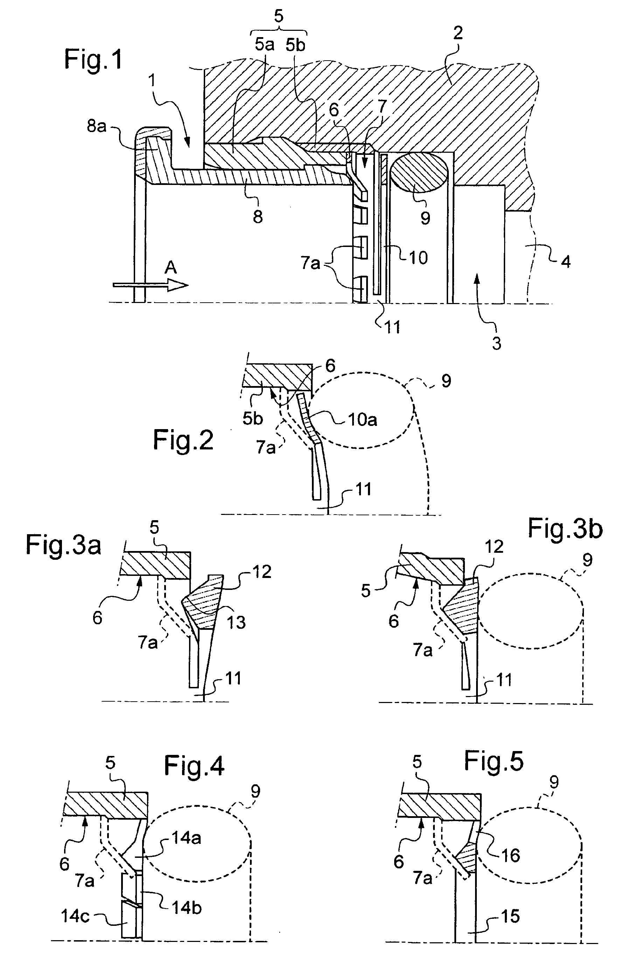

A la figure 1 on a représenté un insert 1 selon l'invention logé de manière connue dans l'alésage 3 d'un corps 2, dans lequel débouche un conduit 4 à alimenter par ou raccorder à une tubulure non représentée dont l'extrémité sera introduite dans l'alésage 3. L'insert 1 comporte une partie tubulaire 5, en deux sections assemblées axialement qui définissent entre elles une gorge 6 pour la couronne extérieure d'une rondelle 7 à dents 7a. L'insert 1 est également équipé d'un poussoir 8 qui peut coulisser dans la partie tubulaire 5 de manière qu'un enfoncement de ce dernier, par action sur sa collerette extérieure 8a, dans l'insert provoque le soulèvement des dents 7a qui normalement sont en prise avec la tubulure. Les moyens de raccordement comportent en plus un joint torique 9 qui est situé en aval des dents dans le sens A de la connexion de la tubulure.

Selon l'invention, l'insert 1 comporte une paroi avant 10, au-delà des dents dans le sens A, qui est annulaire, qui est attachée à l'extrême bord avant de la partie tubulaire 5 par des pattes 11 et qui définit de manière préférée au moins deux volets inclinables en direction des dents 7a de la rondelle 7. Cette paroi pourrait ne définir qu'un seul volet inclinable, par une découpe angulaire appropriée, le reste de la paroi étant rigidement solidaire du corps de l'insert. Dans le mode de réalisation des figures 1 et 2, la paroi est divisée en deux arceaux 10a par une fente dans le plan de la figure, chacun d'eux étant solidaire de la partie tubulaire 5 de l'insert par une patte centrale telle que 11.

Quand la connexion est réalisée et que le circuit est mis en service, la pression qui règne dans l'alésage 3 tend à pousser le joint 9 vers l'arrière (en référence au sens A) en direction des dents 7a. Ce déplacement conduit à un appui du joint sur la paroi 10 qui se déforme en s'inclinant vers les dents, comme l'illustre la figure 2. Cette déformation porte la paroi 10 au contact des dents 7a de la rondelle et en constitue une butée anti-soulèvement, s'opposant notamment à un actionnement intempestif du poussoir 8 et donc à une déconnexion non-désirée.

Aux figures 3a et 3b, on retrouve certains des éléments déjà décrits avec les mêmes références. La paroi déplaçable et/ou inclinable et/ou déformable est dans ce cas en forme de deux arceaux 12, attachés chacun par une patte 11 centrale à la paroi tubulaire 5 de l'insert. Chaque arceau possède un bord périphérique extérieur dont une partie de celui-ci est de diamètre plus important que le diamètre intérieur de la partie tubulaire 5 au niveau de son extrémité. En outre, chaque arceau est déformé vers l'avant (par rapport au sens A) de manière qu'au repos, comme représenté à la figure 3a, il soit écarté de la partie tubulaire et des dents 7a. La face de chaque arceau tournée vers les dents est pourvue d'un relief 13 (dont le profil radial est en correspondance de forme avec le profil des dents en prise dans la tubulure) de sorte que, lorsque sous l'effet de la pression la paroi a été déplacée en direction des dents et est en appui par sa périphérie sur le corps tubulaire 5, le relief 13 est sensiblement au contact des dents 7a et s'oppose à leur soulèvement (figure 3b).

A la figure 4, la paroi selon l'invention est ici constituée par une pluralité de palettes 14a, 14b, 14c, ... flexibles qui sont attachées au corps tubulaire 5 de l'insert. Ces palettes flexibles possèdent également un relief du côté des dents, comme celui décrit précédemment.

A la figure 5 enfin, le mode de réalisation représenté fait apparaître une paroi qui est un anneau 15, relié au corps tubulaire 5 par des pattes flexibles 16 qui autorisent, sous la poussée du joint 9, un déplacement de cet anneau en direction des dents dans ce même but de s'opposer à leur soulèvement. Cet anneau possède aussi ce relief dont le profil est sensiblement en correspondance de forme avec le profil des dents 7a de cette dernière, au maximum de leur fléchissement.

Les dispositions de l'invention permettent d'augmenter la durée de vie du joint torique, en le préservant d'un contact direct avec la rondelle dentée, sans impact sur la procédure de montage de l'insert et le coût de revient de la connexion.

## Revendications

1. Insert tubulaire (1) pour raccord instantané destiné à être logé dans un alésage (3), comportant un corps (5) généralement tubulaire, au moins une rondelle (7) à dents (7a) de cramponnage d'une tubulure, et un poussoir tubulaire (8) situé en arrière de la rondelle (7) dans le sens d'introduction (A) de ladite tubulure à raccorder, tous deux logés dans ce corps tubulaire (5) dont la surface interne définit des moyens de guidage du poussoir (8) et de maintien (6) de la rondelle (7), **caractérisé en ce que** qu'il comporte, en avant de la rondelle dentée (7), une paroi annulaire transversale (10) attachée au bord extrême correspondant du corps annulaire (5) et découpée pour former au moins un volet déplaçable et/ou déformable en direction de la rondelle à dents.

2. Insert selon la revendication 1, **caractérisé en ce que** la paroi (10) est conformée en un anneau (15) attaché par des pattes flexibles (16) au bord extrême du corps tubulaire (5).

3. Insert selon la revendication 2, **caractérisé en ce que** l'anneau est divisé en deux arceaux (10a) attachés par leur partie médiane (11) au bord extrême du corps tubulaire.

4. Insert selon la revendication 2 ou la revendication 3, **caractérisé en ce que** les arceaux et/ou l'anneau sont pourvus de reliefs (13) sur leur face tournée vers la rondelle (7), sensiblement en correspondance de profil avec les dents (7a) de cette dernière.

5. Insert selon la revendication 3, **caractérisé en ce que** les arceaux possèdent un bord périphérique externe dont au moins un secteur est de rayon supérieur au diamètre interne du corps (5) mesuré à son bord extrême

6. Insert selon la revendication 1, **caractérisé en ce que** la paroi (10) est divisée en une pluralité de palettes flexibles (14a, 14b, 14c).

7. Insert selon la revendication 6, **caractérisé en ce que** l'extrémité libre de chaque palette (14a, 14b, 14c) possède un relief sur sa face tournée vers la rondelle (7) dont le profil est sensiblement en correspondance de forme avec le profil des dents (7a) de cette dernière.

## Claims

1. Tubular insert (1) for an instantaneous connector intended to be housed in a bore (3), including a generally tubular body (5), at least one washer (7) with teeth (7a) for gripping a tube, and a tubular pusher (8) situated behind the washer (7) in the direction (A) of introduction of said tube to be connected, both accommodated in this tubular body (5) the internal surface of which defines guide means for the pusher (8) and retaining means (6) for the washer (7), **characterised in that** it includes, in front of the toothed washer (7), an annular transverse wall (10) attached to the corresponding extreme edge of the annular body (5) and cut out to form at least one flap adapted to be moved and/or deformed in the direction of the toothed washer.

2. Insert according to claim 1, **characterised in that** the wall (10) is conformed as a ring (15) attached by flexible lugs (16) to the extreme edge of the tubular body (5).

3. Insert according to claim 2, **characterised in that** the ring is divided into two hoops (10a) attached by their median part (11) to the extreme edge of the tubular body.

4. Insert according to claim 2 or claim 3, **characterised in that** the hoops and/or the ring are provided with raised patterns (13) on their side facing toward the washer (7), having a profile substantially corresponding to the teeth (7a) of the latter.

5. Insert according to claim 3, **characterised in that** the hoops have an external peripheral edge at least one sector of which has a radius greater than the inside diameter of the body (5) measured at its extreme edge.

6. Insert according to claim 1, **characterised in that** the wall (10) is divided into a plurality of flexible blades (14a, 14b, 14c).

7. Insert according to claim 6, **characterised in that** the free end of each blade (14a, 14b, 14c) has a raised pattern on its side facing toward the washer (7) the profile of which has a shape that substantially corresponds to the shape of the profile of the teeth (7a) of the latter.

## Patentansprüche

1. Rohrförmiger Einsatz (1) zur Schnellverbindung, der zur Aufnahme in einer Bohrung (3) bestimmt ist, umfassend einen im Wesentlichen rohrförmigen Körper (5), mindestens eine Ringscheibe (7) mit Zähnen (7a) zum Greifen eines Rohrstutzens und einen in Einführrichtung (A) des genannten anzuschließenden Rohrstutzens hinter der Ringscheibe (7) gelegenen rohrförmigen Stößel (8) umfasst, die beide in diesem rohrförmigen Körper (5) aufgenommen sind, dessen Innenfläche Mittel zur Führung der Druckvorrichtung (8) und zum Halten (6) der Ringscheibe (7) definiert, **dadurch gekennzeichnet, dass** der rohrförmige Einsatz vor der gezahnten Ringscheibe (7) eine ringförmige transversal gerichtete Wand (10) umfasst, die am entsprechenden äußeren Rand des ringförmigen Körpers (5) befestigt und so geschnitten ist, dass mindestens eine Klappe gebildet wird, die in Richtung der gezahnten Ringscheibe auslenkbar und/oder verformbar ist.

2. Einsatz nach Anspruch 1, **dadurch gekennzeichnet, dass** die Wand (10) als ein Ring (15) ausgebildet ist, der durch flexible Klauen (16) am äußeren Rand des rohrförmigen Körpers (5) befestigt ist.

3. Einsatz nach Anspruch 2, **dadurch gekennzeichnet, dass** der Ring in zwei Bögen (10a) geteilt ist, die durch ihren mittleren Abschnitt (11) am äußeren Rand des rohrförmigen Körpers befestigt sind.

4. Einsatz nach Anspruch 2 oder 3, **dadurch gekennzeichnet, dass** die Bögen und/oder der Ring auf ihrer zur Ringscheibe (7) gerichteten Seite Erhöhungen (13) aufweisen, die in etwa dem Profil der Zähne (7a) der Ringscheibe entsprechen.

5. Einsatz nach Anspruch 3, **dadurch gekennzeichnet, dass** die Bögen einen äußeren Umfangsrand besitzen, bei dem mindestens ein Sektor einen Radius hat, der größer als der Innendurchmesser des Körpers (5) ist, gemessen an seinem äußeren Rand.

6. Einsatz nach Anspruch 1, **dadurch gekennzeichnet, dass** die Wand (10) in eine Vielzahl von flexiblen Platten (14a, 14b, 14c) aufgeteilt ist.

7. Einsatz nach Anspruch 6, **dadurch gekennzeichnet, dass** das freie Ende jeder Platte (14a, 14b, 14c) auf ihrer zur Ringscheibe (7) gerichteten Seite eine Erhöhung aufweist, das in etwa der Form des Profils der Zähne (7a) der Ringscheibe entspricht.
